# FASCICULE DE BREVET EUROPEEN

(11) **EP 3 861 185 B1**
(45) Date de publication et mention de la délivrance du brevet: **28.10.2026**
(21) Numéro de dépôt: 19801928.3
(22) Date de dépôt: 02.10.2019
(51) Int. Cl.: E04G 23/02, C04B 28/02, B28C 5/02, E21D 11/10, B05D 1/02, E04G 21/04, B05B 7/04, B28C 5/40, C04B 28/04, C04B 28/18

(54) **PROJECTION DE BFUHP A DES FINS DE RENFORCEMENT ET DE REGENERATION DE STRUCTURES PREEXISTANTES**
PROJEKTION VON ULTRAHOCHLEISTUNGSFASERBETON ZUR VERSTÄRKUNG UND REGENERATION BESTEHENDER STRUKTUREN
PROJECTION OF UHPFRC FOR REINFORCEMENT AND REGENERATION OF PRE-EXISTING STRUCTURES

(30) Priorité: 03.10.2018 FR 1859181
(43) Date de publication de la demande: 11.08.2021
(73) Titulaire: Soletanche Freyssinet, 92500 Rueil Malmaison (FR)
(72) Inventeur: HUYNH TUONG, Alain, 92200 Neuilly sur Seine (FR); PETIT, Bertrand, 69130 Ecully (FR); TEPLY, François, 13009 Marseille (FR); CHAUX, Cédric-Olivier, 69850 Duerne (FR)
(74) Mandataire: Plasseraud IP
(86) Numéro de dépôt international: PCT/FR2019/000155
(87) Numéro de publication internationale: WO 2020/070395

(56) Documents cités:
- EP-A1- 0 009 660
- JP-A- H11 278 904
- JP-B2- 5 713 540
- HÖFLER JÜRGEN ET AL: "Sika Sprayed Concrete Handbook", 31 August 2011 (2011-08-31), Internet, pages 1 - 90, XP093216767, Retrieved from the Internet <URL:https://swe.sika.com/dms/getdocument.get/9c3aa4bd-1aa5-3366-8b2a-5d94759f2684/Sika%20Sprayed%20concrete%20-%20Handbook%202012.pdf> [retrieved on 20241021]

## Description

L'invention concerne le domaine de la réparation, de la régénération et du renforcement de structures telles que des tunnels, des voûtes, des buses métalliques ou des galeries par coques ultra-minces en béton fibré à ultra hautes performances (BFUHP).

Les bétons regroupés sous l'appellation BFUHP sont des bétons haut de gamme renforcés par des fibres métalliques, polymères ou minérales. Ces fibres, combinées à des agents plastifiants appropriés, interagissent avec la matrice cimentaire, permettent d'obtenir un comportement ductile en traction et de réduire ou de s'affranchir de l'emploi d'armatures passives. Ces bétons présentent une plus grande résistance en traction et en compression que les bétons à hautes performance classiques.

Il est connu d'utiliser du BFUHP afin de régénérer ou de renforcer des structures. Toutefois, le BFUHP est alors coulé dans des coffrages. Les BFUHP utilisés dans la régénération et le renforcement de structures sont donc de consistance fluide ce qui permet un bon remplissage des coffrages mais oblige à utiliser des coffrages et un béton présentant une teneur en fibres réduite, c'est-à-dire des propriétés mécaniques moins intéressantes.

JP2010180106 A décrit un procédé de projection de BFUHP utilisant de l'air comprimé.

Il existe donc un besoin pour une solution simplifiée permettant de régénérer ou de renforcer des structures avec un BFUHP à haute teneur en fibres.

L'invention y parvient en utilisant du BFUHP projeté combiné à une solution de pompage innovante (ou « améliorée »).

En effet, bien qu'il soit par ailleurs également connu d'utiliser un béton projeté pour régénérer ou renforcer des structures, l'utilisation de BFUHP à haute teneur en fibres va à l'encontre des solutions ordinairement proposées.

Ainsi, les bétons projetés par voie mouillée pour la régénération ou le renforcement de structures doivent être très plastiques. On utilise donc à l'inverse des compositions plastiques de façon native, ou fluides pour leur bonne aptitude au pompage mais nécessitant l'ajout d'agent raidisseur au sein de la lance de projection, pour une tenue suffisante sur le support.

Toutefois, le BFUHP est difficile à pomper en raison du risque important de formation d'oursin bloquant le pompage lorsque la teneur en fibres du BFUHP dépasse 2% en volume. Les oursins sont des enchevêtrements de fibres qui bloquent le pompage du BFUHP.

Il est donc très difficile d'effectuer des opérations de régénération ou de renfort de structure par projection de BFUHP à haute teneur en fibres, de sorte que les bétons projetés présentent généralement des propriétés mécaniques peu satisfaisantes.

La nécessité d'utiliser un béton compatible avec les opérations de pompage conduit aujourd'hui à utiliser des bétons dont la consistance correspondant à une classe d'affaissement de S3 à S4, soit 10 à 21 cm, au sens de la norme NF EN 206-1 ; les consistances de classe d'affaissement S1et S2, soit 2 à 9 cm, sont d'un emploi problématique.

Des difficultés de pompage peuvent également survenir en raison d'une friction excessive au sein des mélanges présentant un squelette granulaire trop compact, une teneur élevée en ciment et une fraction volumique de fibres métalliques élevée : les mélanges deviennent alors de plus en plus difficiles à pomper et des blocages surviennent.

L'absence de solution de pompage et de projection d'un BFUHP, en particulier concernant les BFUHP présentant une teneur en fibre supérieure à 2%, a donc tenu l'homme de l'art éloigné de la perspective d'utiliser du BFUHP à haute teneur en fibres, par technique de projection afin de pouvoir effectuer la régénération ou le renfort de structures.

L'invention concerne un procédé de régénération et renforcement de structures existantes tels des ouvrages en béton, et par extension, des éléments de charpentes métalliques moyennant la mise en œuvre de connecteurs. Ce procédé consiste à couvrir par projection les parois de la structure au moyen d'un béton fibré ultra haute performance (BFUHP).

L'invention concerne également des buses constituées d'une paroi métallique en tôles ondulées et d'un certain volume de sol contigu, en mettant en œuvre le procédé selon l'invention.

A cet égard, la Demanderesse est parvenue à mettre au point un nouveau procédé de renforcement d'une structure comprenant les étapes suivantes :
- préparation de BFUHP comprenant un mélange précurseur (ou prémix) cimentaire, de l'eau, un agent fluidifiant et des fibres métalliques, le BFUHP présentant une teneur en fibres métalliques comprise entre 2% et 3,5% en volume, le mélange ne comprenant pas d'agent raidisseur,
- transport du BFUHP par pompage vers une buse de projection adaptée,
- réalisation d'un revêtement d'épaisseur égale à au moins deux fois la longueur de la plus grande des fibres métalliques, par projection du mélange sur une surface de la structure par adjonction d'un flux d'air comprimé dans la buse de projection, dans lequel la buse (1) est montée sur une extrémité d'un tuyau d'arrivée de BFUHP (10) et comporte une prise à triple entrée (11) pour le mélange du BFUHP provenant du tuyau avec un flux d'air comprimé simple ou double et provient d'un raccordement de la prise à l'une ou l'autre alimentation en air comprimé (12, 13), dans lequel on effectue le pompage par une pompe à piston à un débit compris entre 2 et 10 m³ /h, et la projection est par voie mouillée avec un débit d'air comprimé à la buse compris entre 10.000 et 17.000 l/min et à une pression comprise entre 5 et 11 bars, aucune adjonction d'agent raidisseur n'étant effectuée lors de la projection..

La structure à renforcer est de préférence une structure enterrée telle qu'un tunnel ou une voûte. En effet, le caractère enterré de la structure constitue une contrainte forte qui empêche l'utilisation de la plupart des procédés de renforcement usuels. Le procédé selon l'invention a donc un intérêt accru dans ce contexte.

Le « renforcement » au sens de l'invention peut être effectué sur une structure préexistante ou sur une structure neuve. Dans ce cas, le renforcement peut être une étape de la construction de cette structure.

Le mélange précurseur (ou prémix) cimentaire utilisé pour la préparation du BFUHP est constitué d'un liant, d'agrégats et des éléments fins à réaction pouzzolanique. Les liants sont par exemple choisis parmi les ciments de type Portland, éventuellement HTS (Haute Teneur en Silice)

Ainsi, le mélange précurseur (ou prémix) cimentaire comprend de préférence entre 700 à 1 000 kg de ciment par m3 de mélange, c'est-à-dire une très haute teneur en ciment, garante de bonnes propriétés mécaniques liées à une faible porosité.

Les agrégats utilisés sont par exemple des éléments granulaires (sables), aciculaires (par exemple fibres de bauxite, fibres de carbure de silicium ou fibres de titanates de potassium) ou plaquettaires (par exemple des plaquettes de mica, de talc, de silicates mixtes ou d'aluminates mixtes). La taille caractéristique des agrégats est choisie suffisamment petite, de façon à ne pas compromettre les propriétés mécaniques conférées par les fibres du BFUHP, par exemple inférieure à 2mm pour les éléments granulaires, 1mm pour les éléments aciculaires ou plaquettaires

Les éléments fins à réaction pouzzolanique sont choisis parmi les composés de silice (par exemple fumées de silice), les cendres volantes, les laitiers de hauts fourneaux ou les dérivés d'argile tels que le kaolin. Ces éléments présentent une taille de particules élémentaires comprise entre 0,1 µm et 1µm et permettent d'améliorer la compacité du béton en fermant les pores.

Les fibres en question sont des fibres métalliques, par exemple des fibres en acier à haute tenue mécanique, éventuellement en acier inoxydable, ou encore en acier revêtu de métal non ferreux tel que le cuivre, le zinc ou le nickel., car les fibres métalliques confèrent des propriétés de résistance mécanique importantes.

Outre le mélange précurseur (ou prémix) et les fibres, le BFUHP comporte également de l'eau. La teneur en eau est de préférence très réduite, par exemple le rapport massique eau/ciment est inférieur à 0,25, de préférence inférieur à 0,20. Une teneur en eau très réduite permet avantageusement de limiter la présence d'eau libre (i.e. l'eau n'entrant pas dans la réaction chimique d'hydratation du ciment) et de réduire la porosité du BFUHP, en particulier le réseau de pores connectés, ce qui procure au BFUHP une faible perméabilité aux agents nocifs tels que les chlorures.

Afin de rendre possible cette teneur réduite en eau, le BFUHP comporte en outre un agent fluidifiant (ou dispersant) choisi parmi les lignosulfonates, les polynaphtalènes, les dérivés du formaldéhyde, les polyacrylates ou polycarboxylates de métaux alcalins et les polyoxydes d'éthylène greffé.

Les fibres ont par exemple une plus petite dimension moyenne, e.g. un diamètre, comprise entre 0,1 à 0,3 mm et une plus grande dimension moyenne, par exemple une longueur, comprise entre 10 et 30 mm. De préférence, la plus grande dimension moyenne est supérieure à 14 mm. En effet, bien que des fibres plus longues s'accompagnent d'un risque accru de formation d'oursin lors du pompage, elles confèrent également de meilleures propriétés mécaniques, et l'invention permet dans une certaine mesure de s'affranchir du problème de la formation des oursins. La dimension des fibres dépendra typiquement de l'épaisseur de BFUHP que l'on souhaite projeter. Plus l'on souhaite obtenir une épaisseur importante, plus des fibres longues auront un intérêt.

La proportion des fibres est également un facteur clé des propriétés mécaniques obtenues. On utilisera une haute teneur en fibres métalliques, par exemple comprise entre 2 et 3,5% en volume de béton.

Toutefois, de nombreux auteurs ont mesuré une réduction de la fluidité du béton concomitamment à l'augmentation de la teneur en fibres métalliques et ont constaté que cet effet croît avec un paramètre empirique, le facteur de fibres, défini comme le produit de la concentration de fibres par le facteur d'aspect des fibres utilisées.

Le BFUHP est alors pompé et amené vers une buse de projection adaptée via un conduit de section utile adaptée aux débit et pression nécessaires à la projection du mélange de béton fibré.

Un flexible de transport (ou approvisionnement) est connecté à une pompe à pistons ou cylindres (jumeaux) à bas débit, compris entre 2 et 10 m³ par heure, à haute pression de travail, par exemple supérieure à 70 bar, de préférence à 80 bar, à grand diamètre de pistons, par exemple supérieur à 150 mm, de préférence à 200mm, présentant une grande longueur de chambre, par exemple supérieure à 400 mm et de préférence à 570 mm, et présentant un grand diamètre de sortie, par exemple supérieur à 100 mm et de préférence de l'ordre de 150mm.

Un redimensionnement des vérins d'activation (de balancement) d'une valve en S et de leur système de pilotage hydraulique est également effectué.

Ce redimensionnement permet de cisailler rapidement la section du mélange de BFUHP présentant une résistance élevée en vue de minimiser les fluctuations de débit en sortie de pompe tout en restant dans la plage de travail des vérins d'activation de la valve.

Cette adaptation permet d'obtenir un débit régulier et adapté à l'opération de projection.

Un réducteur progressif de section est disposé entre sortie de pompe et flexible de section utile réduite, correspondant à la section en entrée de buse ou lance de projection, 50mm par exemple. La réduction de diamètre utile s'effectue de façon linéaire et régulière sur plusieurs mètres de longueur pour conserver une répartition homogène des fibres dans le mélange afin de prévenir la formation d'oursins. La transition entre un diamètre de 125mm en sortie de pompe et un diamètre de 50mm du flexible est effectué sur une longueur comprise entre 5 et 10m.

La buse de projection adaptée est caractérisée par une double injection d'air comprimé. Deux prises d'air comprimé diamétralement opposées, sont branchées latéralement sur la section d'entrée d'un convergent constituant la buse. La buse est montée dans le prolongement d'une lance et/ou du flexible de pompage/transport du mélange de béton fibré arrivant sous pression. Le convergent constituant la buse présente une section utile typique de 50mm de diamètre, égale à celle du flexible de transport du béton. En sortie, la buse présente un diamètre utile réduit à une fraction typique de 80%, c'est-à-dire de 40mm pour 50mm en entrée. La buse présente une longueur comprise entre 250 et 500mm, 300mm par exemple pour un diamètre utile de 50mm.

Le mélange est ensuite projeté sur une surface de la structure à réparer ou renforcer par adjonction d'air comprimé. Le flux d'air comprimé peut être introduit de façon latérale au niveau de la buse de façon à entrainer le mélange.

Le procédé de renforcement selon l'invention permet notamment d'éviter la formation d'oursins et donc d'obtenir un renforcement par projection, particulièrement commode dans le cas de structures enterrées, tout en bénéficiant des excellentes propriétés mécaniques du BFUHP. En outre, la projection présente un effet synergique avec l'utilisation de BFUHP car elle permet d'obtenir une orientation préférentielle des fibres que l'on n'obtient pas lorsque le BFUHP est coulé. Cette orientation préférentielle des fibres se traduit par de meilleures résistances en traction, en compression et en flexion dans les directions parallèles à la surface sur laquelle le BFUHP est projeté.

La projection est effectuée par voie mouillée à un débit compris entre 2 et 10 m3/h. Plus le BFUHP à projeter sera fluide, moins le débit d'air comprimé à appliquer sera important. Par conséquent, pour un même flux d'air comprimé, plus le BFUHP est fluide, plus le débit de projection est important.

Ainsi, on effectue la projection par voie mouillée par adjonction d'air comprimé à un débit d'air comprimé à la buse ou lance compris entre 10.000 et 17.000 l/min. On effectue la projection par voie mouillée par adjonction d'air comprimé à une pression d'air comprise entre 5 et 11 bars.

Le procédé selon l'invention comprend de préférence en outre une étape de préparation de la surface de la structure préalablement à la projection du mélange sur la surface. La préparation de surface est effectuée suivant des techniques connues de l'homme du métier. En revanche, l'emploi de béton fibré BFUHP permet de s'affranchir de l'installation d'armatures passives (par exemple sous forme d'un treillis soudé fixé sur le support, préalablement à la projection du béton).

L'invention a également pour objet une structure réparée, renforcée ou régénérée selon le procédé de l'invention, dans lequel la structure présente au moins une paroi revêtue d'un revêtement de BFUHP par projection, le revêtement ne comprenant pas d'agent raidisseur et présentant une épaisseur égale à au moins deux fois la longueur de la plus grande des fibres métalliques.

L'invention pourra être mieux comprise à l'aide de l'exemple de réalisation non limitatif décrit ci-après et à l'examen du dessin annexé sur lequel :

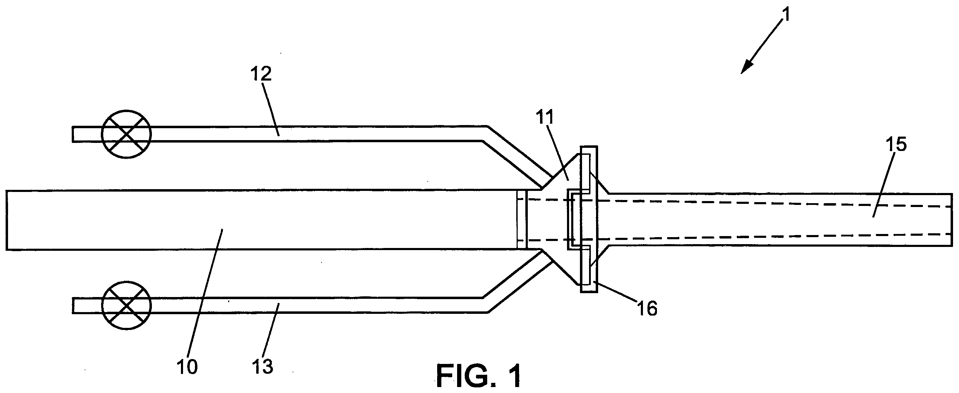

- la figure 1 représente un exemple de réalisation de buse de projection utilisable dans le procédé selon l'invention.

Dans le cadre du présent exemple de réalisation non limitatif, il est préalablement préparé un mélange BFUHP ayant une teneur en ciment de 700 à 1000 kg/m3, une teneur en fumée de silice ou de métakaolin de 20 à 30% en masse de ciment, une teneur en fibres métalliques de 2 à 3,5% en volume de béton, un rapport massique eau/ciment (E/C) inférieur à 0,25 et un seuil de cisaillement d'au moins 300 Pa pour une vitesse de cisaillement de 0.07s-1.

Le mélange en question ne comprend pas d'agent raidisseur

On effectue une opération de pompage de ce mélange au moyen d'une pompe à pistons (jumeaux) à un débit de 2 à 10 m3 par heure afin d'effectuer une projection en voie humide.

L'opération de projection elle-même est effectuée par adjonction d'air comprimé à un débit d'air comprimé à la buse ou lance compris entre 10.000 et 17.000 l/min et une pression d'air comprise entre 5 et 11 bars.

La buse utilisée est une buse de 50 mm de diamètre utile en entrée.

La projection se fait sur une surface en béton, en métal, en bois ou encore en maçonnerie préalablement préparée.

Aucune adjonction d'agent raidisseur n'est effectuée lors de la projection à la buse ou lance.

On réalise ainsi un revêtement d'une couche de BFUHP d'épaisseur égale à au moins deux fois la longueur de la plus grande fibre métallique.

Les caractéristiques de ce revêtement sont évaluées selon la norme NF P 18-470. On mesure une résistance moyenne en compression à 28 jours de 90 à 180 MPa, une limite d'élasticité moyenne en traction à 28 jours de 4 à 10 MPa, et des propriétés en post-fissuration conforme au critère de non-fragilité en section 9.1 de la norme NF P18-710.

Le mélange fibré est de consistance ferme, relativement sec et peu maniable au sens de la norme NF EN 206-1 et sa classe de consistance (S1 ou S2) est en dehors du champ couvert par la norme NF P 18 470 relative aux BFUHP.

Ceci n'empêche pas le mélange fibré d'être pompé sur une distance de plus de 100 m au moyen d'une pompe à piston et projeté à l'air comprimé à très haut débit avec un petit diamètre de buse de 50 mm, permettant d'atteindre des rendements de 2 à 10 m3/h sans formation d'oursins, ni ségrégation du mélange lors du pompage et de la projection.

En raison de la longueur des conduites pouvant atteindre la centaine de mètres, du diamètre réduit en sortie de buse de l'ordre de 50mm, de la rhéologie du BFUHP présentant un seuil de cisaillement et une viscosité élevés, du risque de formation d'oursins et d'échauffement du produit dans les conduites, il a été nécessaire de choisir une pompe à piston plutôt qu'une pompe à rotor de façon à privilégier la pression de travail sur le débit.

La déposante a pour ce faire sélectionné une pompe à pistons ou cylindres (jumeaux) à bas débit, i.e. compris entre 2 et 10 m3 par heure, à haute pression de travail, i.e. de 80bar au moins, à grand diamètre de pistons, i.e. de 200mm, présentant une grande longueur de chambre, i.e. de 570 mm au moins, et présentant un grand diamètre de sortie, par exemple de l'ordre de 150mm.

La pompe est équipée d'une valve dite « en S » associée à un mécanisme de balancement. La puissance des vérins d'activation (vérins transversaux assurant le balancement) de la valve en S ainsi que leur système de pilotage hydraulique ont été adaptés pour prévenir ou limiter les fluctuations de débit.

Ce redimensionnement permet de cisailler rapidement la section de béton fibré (BFUHP) présentant une résistance élevée en vue de minimiser les fluctuations de débit tout en restant dans la plage de travail des vérins.

Cette adaptation permet d'obtenir un débit régulier et adapté à l'opération de projection d'un mélange fibré à viscosité élevée.

La projection peut s'effectuer manuellement ou au moyen d'un robot. La projection peut être réalisée en une couche ou en plusieurs couches successives sans dépasser un délai de trois heures entre couches successives, afin notamment d'éviter la formation de joints froids.

On a représenté à la figure 1 une buse 1 adaptée à la projection de BFUHP. La buse est montée sur une extrémité d'un tuyau d'arrivée de BFUHP 10. Elle comporte une prise à triple entrée 11 qui permet le mélange du BFUHP provenant du tuyau 10 avec un flux d'air comprimé. Le flux d'air comprimé peut être simple ou double, et provient d'un raccordement de la prise à l'une et ou l'autre alimentation en air comprimé 12, 13. La prise à triple entrée 11 est reliée à une lance de projection 15. La liaison entre la prise à triple entrée 11 et la lance de projection 15 peut être de tout type et par exemple consister en des moyens d'encliquetage ou de visserie. Avantageusement, la liaison est munie d'une bague fusible de sécurité 16 permettant le détachement de la buse ou lance de projection 15 en cas de pression supérieure à un certain seuil, par exemple lorsque la lance de projection se bouche.

La bague fusible de sécurité permet de prévenir un endommagement de la buse 1. Elle peut être munie d'une dérivation vers des moyens de contention du BFUHP, non représentés.

La lance de projection 15 est de section sensiblement circulaire et de dimension inférieure ou égale à celle du tuyau d'arrivée de BFUHP10. Si la section de la lance de projection 15 est choisie inférieure à celle du tuyau d'arrivée de BFUHP 10, il s'ensuit une augmentation de la pression dans la lance de projection ce qui peut permettre une meilleure projection du béton.

Par exemple, le tuyau 10 peut présenter une section circulaire de diamètre 50 mm et la lance de projection 15 peut présenter une section circulaire de diamètre compris entre 40 et 50 mm.

La longueur de la lance de projection est avantageusement comprise entre 300 et 400 mm pour des raisons de maniabilités de la lance et de contention de la pression.

Avantageusement, le tuyau d'arrivée de BFUHP 10 est flexible. Il peut être constitué d'un matériau déformable élastiquement ou pas.

A l'inverse, la lance de projection 15 est avantageusement constituée d'un matériau rigide.

La lance de projection 15 et le tuyau d'arrivée du BFUHP 10 étant amenés à être manipulés, ils sont avantageusement isolés thermiquement, afin de pouvoir projeter en toute sécurité lors d'un échauffement du mélange.

Il est entendu que les modes de réalisation décrits ne sont pas limitatifs et qu'il est possible d'apporter des améliorations à l'invention sans sortir du cadre d'icelle.

A moins que le contraire ne soit précisé, le mot « ou » est équivalent à et/ou. De même, le mot « un » est équivalent à « au moins un » sauf si le contraire est précisé.

## Revendications

1. Procédé de renforcement d'une structure comprenant les étapes suivantes :
- préparation de BFUHP comprenant un mélange précurseur cimentaire, de l'eau, un agent fluidifiant et des fibres métalliques, le BFUHP présentant une teneur en fibres métalliques comprise entre 2% et 3,5% en volume, le mélange ne comprenant pas d'agent raidisseur,
- transport du BFUHP par pompage vers une buse de projection adaptée,
- réalisation d'un revêtement d'épaisseur égale à au moins deux fois la longueur de la plus grande des fibres métalliques, par projection du mélange sur une surface de la structure par adjonction d'un flux d'air comprimé dans la buse de projection, dans lequel la buse (1) est montée sur une extrémité d'un tuyau d'arrivée de BFUHP (10) et comporte une prise à triple entrée (11) pour le mélange du BFUHP provenant du tuyau avec un flux d'air comprimé simple ou double et provient d'un raccordement de la prise à l'une ou l'autre alimentation en air comprimé (12, 13), dans lequel on effectue le pompage par une pompe à piston à un débit compris entre 2 et 10 m³/h, et la projection est par voie mouillée avec un débit d'air comprimé à la buse compris entre 10.000 et 17.000 l/min et à une pression comprise entre 5 et 11 bars, aucune adjonction d'agent raidisseur n'étant effectuée lors de la projection.

2. Procédé selon la revendication 1, dans lequel les fibres métalliques sont des fibres en acier à haute tenue mécanique.

3. Procédé selon revendication 1 ou 2, dans lequel le mélange précurseur cimentaire comprend entre 700 à 1 000 kg de ciment par m3 de mélange.

4. Procédé selon l'une quelconque des revendications 1 à 3, dans lequel le BFUHP présente un rapport massique eau/ciment inférieur à 0,25.

5. Procédé selon l'une quelconque des revendications 1 à 4, dans lequel les fibres présentent une plus grande dimension moyenne, par exemple une longueur, supérieure à 14 mm.

6. Procédé selon l'une quelconque des revendications 1 à 5, dans lequel la buse est montée sur une extrémité d'un tuyau d'arrivée de BFUHP et comprend une prise à triple entrée pour le mélange du BFUHP provenant du tuyau avec un flux d'air comprimé, simple ou double et provenant d'un raccordement de la prise à l'une et ou l'autre alimentation en air comprimé (12, 13).

7. Procédé selon l'une quelconque des revendications 1 à 6, dans lequel :
- on effectue le pompage par une pompe à pistons jumeaux,
- le débit de pompage est compris entre 2 et 10 m3/h et,
- la projection s'effectue par voie mouillée.

8. Procédé selon la revendication 7, dans lequel la pompe est équipée d'une valve en S associée à un mécanisme de balancement, la puissance des vérins transversaux assurant le balancement de la valve en S ainsi que leur système de pilotage hydraulique ayant été adaptés pour prévenir ou limiter les fluctuations de débit.

9. Procédé selon la revendication 8, dans lequel la pression de travail de la pompe est supérieure à 80 bar, la pompe étant à grand diamètre de pistons, i.e. de 200mm, présentant une grande longueur de chambre, i.e. de 570 mm au moins, et présentant un grand diamètre de sortie, par exemple de l'ordre de 150mm.

10. Procédé selon l'une quelconque des revendications 1 à 9, dans lequel on effectue le pompage sur une distance supérieure à 100 m.

11. Structure renforcée, réparée ou régénérée selon le procédé de l'une quelconque des revendications 1 à 10, dans lequel la structure présente au moins une paroi revêtue d'un revêtement de BFUHP par projection, le revêtement ne comprenant pas d'agent raidisseur et présentant une épaisseur égale à au moins deux fois la longueur de la plus grande des fibres métalliques.

## Patentansprüche

1. Verfahren zum Verstärken einer Struktur, aufweisend die folgenden Schritte:
- Zubereiten von BFUHP, Ultrahochleistungsfaserbeton, aufweisend ein Zement-Vorgemisch, Wasser, ein Fließmittel und Metallfasern, wobei der BFUHP einen Gehalt an Metallfasern zwischen 2 und 3,5 Volumenprozent aufweist, wobei das Gemisch kein Versteifungsmittel aufweist,
- Transportieren des BFUHP durch Pumpen zu einer angepassten Projektionsdüse,
- Herstellen einer Verkleidung, deren Dicke mindestens gleich 2 Mal die Länge der größten der Metallfasern ist, durch Projektion des Gemisches auf eine Oberfläche der Struktur mithilfe eines in die Projektionsdüse eingespeisten Druckluftstroms, wobei die Projektionsdüse (1) an einem Ende eines BFUHP-Zulaufschlauchs (10) angebracht ist und einen Griff mit Dreifach-Einlass (11) aufweist, um den aus dem Schlauch kommenden BFUHP mit einem einfachen oder doppelten Druckluftstrom zu mischen, der aus einem Anschluss des Griffs an die eine oder die andere Druckluftversorgung (12, 13) kommt, wobei das Pumpen mithilfe einer Kolbenpumpe, die einen Durchfluss von 2 bis 10 m³/h hat, durchgeführt wird, und die Projektion auf nasse Weise mit einem Druckluftdurchfluss zur Düse zwischen 10.000 und 12.000 l/min und mit einem Druck zwischen 5 und 11 bar erfolgt, wobei bei der Projektion keine Zugabe eines Versteifungsmittels durchgeführt wird.

2. Verfahren nach Anspruch 1, wobei die Metallfasern mechanisch hochfeste Stahlfasern sind.

3. Verfahren nach Anspruch 1 oder 2, wobei das Zement-Vorgemisch 700 bis 1000 kg Zement pro m³ Gemisch aufweist.

4. Verfahren nach einem der Ansprüche 1 bis 3, wobei der BFUHP ein Wasser/Zement-Massenverhältnis von weniger als 0,25 aufweist.

5. Verfahren nach einem der Ansprüche 1 bis 4, wobei die Fasern eine durchschnittliche größte Abmessung, beispielsweise eine Länge, von mehr als 14 mm aufweisen.

6. Verfahren nach einem der Ansprüche 1 bis 5, wobei die Düse an einem Ende eines BFUHP-Zulaufschlauchs angebracht ist und einen Griff mit Dreifach-Einlass aufweist, um den aus dem Schlauch kommenden BFUHP mit einem einfachen oder doppelten Druckluftstrom zu mischen, der aus einem Anschluss des Griffs an die eine oder die andere Druckluftversorgung (12, 13) kommt.

7. Verfahren nach einem der Ansprüche 1 bis 6, wobei:
- das Pumpen mithilfe einer Doppelkolbenpumpe durchgeführt wird,
- die Pumpleistung zwischen 2 und 10 m³/h ist, und
- die Projektion auf nasse Weise durchgeführt wird.

8. Verfahren nach Anspruch 7, wobei die Pumpe mit einem S-Ventil ausgestattet ist, das mit einem Hin-und-Her-Schwingungsmechanismus gekoppelt ist, wobei die Stärke von transversalen Schraubenwinden, die das Hin-und-Her-Schwingen des S-Ventils sicherstellen, und ein zugehöriges hydraulisches Führungssystem angepasst sind, um Durchflussschwankungen zu verhüten oder zu begrenzen.

9. Verfahren nach Anspruch 8, wobei der Arbeitsdruck der Pumpe größer als 80 bar ist, die Pumpe Kolben großen Durchmessers, d.h. 200 mm, hat, eine große Kammerlänge, d.h. von mindestens 570 mm, aufweist und einen Auslass großen Durchmessers, zum Beispiel in der Größenordnung von 150 mm aufweist.

10. Verfahren nach einem der Ansprüche 1 bis 9, wobei das Pumpen über eine Distanz von mehr als 100 m durchgeführt wird.

11. Mit einem Verfahren nach einem der Ansprüche 1 bis 10 verstärkte, reparierte oder regenerierte Struktur, wobei die Struktur mindestens eine mit einer Projektion-BFUHP-Verkleidung verkleidete Wand aufweist, wobei die Verkleidung kein Versteifungsmittel aufweist und eine Dicke hat, die mindestens gleich 2 Mal die Länge der größten der Metallfasern ist.

## Claims

1. A method for reinforcing a structure comprising the following steps:
- preparing UHPFRC comprising a cementitious precursor mix, water, a fluidizing agent and metal fibers, the UHPFRC having a metal fiber content comprised between 2 % and 3,5% by volume of concrete, the mix not comprising a stiffening agent,
- transporting the UHPFRC by pumping to a suitable spray nozzle,
- forming a coating with a thickness equal to at least twice the length of the longest metal fiber, by spraying the mixture onto a surface of the structure by introducing a stream of compressed air into the spray nozzle, wherein the nozzle (1) is mounted on one end of a UHPFRC supply hose (10) and includes a triple-inlet fitting (11) for mixing the UHPFRC from the hose with a single or double stream of compressed air, supplied by connecting the fitting to one or the other compressed air supply (12, 13), in which pumping is performed by a piston pump at a flow rate between 2 and 10 m³/h, and spraying is performed wet with a compressed air flow rate at the nozzle between 10,000 and 17,000 L/min and at a pressure between 5 and 11 bar, with no stiffening agent added during spraying.

2. The method as claimed in claim 1, wherein the metal fibers are fibers made of highstrength steel.

3. The method as claimed in claim 1 or 2, wherein the cementitious precursor mix comprises between 700 and 1000 kg of cement per m3 of mix.

4. The method as claimed in any one of claims 1 to 3, wherein the UHPFRC has a water/cement weight ratio of less than 0.25.

5. The method as claimed in any one of claims 1 to 4, wherein the fibers have a greater mean dimension, for example a length, greater than 14 mm.

6. The method as claimed in any one of claims 1 to 5, wherein the nozzle is mounted on one end of a UHPFRC supply hose and includes a triple-inlet fitting for mixing the UHPFRC from the hose with a single or double stream of compressed air, supplied by connecting the fitting to one and or the other compressed air supply (12, 13).

7. The method as claimed in any one of claims 1 to 6, wherein:
- pumping is performed using a twin-piston pump,
- the pumping flow rate is between 2 and 10 m³/h, and
- spraying is performed wet.

8. The method as claimed in claim 7, wherein the pump is equipped with an S-valve associated with a balancing mechanism, the power of the transverse cylinders that cause the S-valve to swing, as well as their hydraulic control system, having been adapted to prevent or limit flow rate fluctuations.

9. The method as claimed in claim 8, wherein the pump's operating pressure exceeds 80 bar, the pump having a large piston diameter, i.e., 200 mm, a chamber length of at least 570 mm, and a large outlet diameter, for example, on the order of 150 mm

10. The method as claimed in any one of claims 1 to 9, wherein pumping is performed over a distance of more than 100 m.

11. A structure reinforced, repaired or regenerated according to the method of any one of claims 1 to 10, wherein the structure has at least one wall spray-coated with UHPFRC, the coating comprising no stiffening agent and having a thickness equal to at least twice the length of the longest metal fiber.
